# EUROPÄISCHE PATENTSCHRIFT

(11) **EP 0 999 086 B1**
(45) Veröffentlichungstag und Bekanntmachung des Hinweises auf die Patenterteilung: **06.07.2005**
(21) Anmeldenummer: 99120686.3
(22) Anmeldetag: 19.10.1999
(51) Int. Cl.: B60K 31/04, B60K 31/18

(54) **Wähleinrichtung zur Einstellung der Fahrgeschwindigkeit eines Fahrzeuges**
Selector lever for setting vehicle cruise speed
Levier de commande d'un régulateur de vitesse pour un véhicule

(30) Priorität: 03.11.1998 DE 19850686
(43) Veröffentlichungstag der Anmeldung: 10.05.2000
(73) Patentinhaber: Bayerische Motoren Werke Aktiengesellschaft, 80809 München (DE)
(72) Erfinder: Künzner, Hermann, 85356 Freising (DE)

(56) Entgegenhaltungen:
- EP-A- 0 178 439
- EP-A- 0 441 961
- WO-A-98/50246
- DE-A- 3 220 083
- DE-A- 4 338 098
- DE-A- 19 721 166
- DE-C- 19 646 104
- DE-U- 29 812 921
- DE-U- 29 908 249

## Beschreibung

Die Erfindung betrifft eine Wähleinrichtung zur Einstellung der Fahrgeschwindigkeit eines Fahrzeugs gemäß dem Oberbegriff des Anspruchs 1.

Solche Wähleinrichtungen sind allgemein unter der Bezeichnung Tempomat (eingetragene Marke der Daimler-Benz AG) bekannt. Zur Komforterhöhung insbesondere bei langen Fahrten mit konstanter Geschwindigkeit ist es damit möglich, über eine Bedieneinrichtung eine aktuelle Geschwindigkeit anzuwählen, die dann automatisch und ohne Aktion des Fahrers beibehalten wird Dies trägt zu einem Komfortgewinn bei.

Bei einer Weiterentwicklung einer solchen Einrichtung ist es bekannt, den Bedienhebel und eine zugeordnete Steuerung derart auszubilden, daß durch Betätigung des Bedienelements die Geschwindigkeit erhöht oder gesenkt werden kann, so können durch entsprechende lange Betätigung des Bedienelements auch andere als die aktuell gewählte Geschwindigkeiten angefahren werden.

Problematisch ist hierbei jedoch, daß bei sich ständig ändernden Höchstgeschwindigkeiten auf einer durchfahrenen Strecke (beispielsweise Ort-Landstraße-Ort oder Autobahn-Baustelle-Autobahn) der Bedienhebel jeweils über eine bestimmte Zeit zu betätigen ist und darauf geachtet werden muß, daß die zu wählende Geschwindigkeit exakt angefahren wird.

Aus der EP 0 188 455 B1 ist eine Vorrichtung zur Beibehaltung von konstanten Fahrzeuggeschwindigkeiten bekannt, bei der n Fahrgeschwindigkeiten einprogrammiert und durch Drücken eines einer bestimmten Geschwindigkeit zugeordneten Knopfes eine Wunschgeschwindigkeit angefahren werden kann. Durch das Drücken der Knöpfe kann jedoch keine aktuelle Fahrgeschwindigkeit kontinuierlich verändert werden.

In der DE 196 46 104 C1 ist eine Vorrichtung zur Auswahl und Anzeige von Geschwindigkeiten bekannt, bei der fest vorgegebene und eingespeicherte Geschwindigkeiten durch Betätigen von Bedienelementen sukzessive angefahren werden können. Eine freie Einstellung von Geschwindigkeitswerten ist jedoch nicht möglich. In der DE 4338098 A1 ist ein Wähleinrichtung gemäß dem Oberbegriff des Anspruchs 1 bekannt, der mehrere Fahrzeuggeschwindigkeitswerte markeit und speichert

Aufgabe der vorliegenden Erfindung ist es, eine Wahleinrichtung zur Einstellung der Fahrgeschwindigkeit eines Fahrzeugs anzugeben, bei der die vorgenannten Nachteile vermieden werden.

Diese Aufgabe wird durch die im Anspruch 1 genannten Merkmale gelöst.

Demgemäß ist es möglich, zumindest zwei, insbesondere aber mehrere Geschwindigkeitsmarken zu setzen, die durch eine Betätigung des Bedienelements angefahren werden können. Beispielsweise können die Geschwindigkeitsmarken oder -werte gesetzt werden, indem die gewünschte Geschwindigkeit angefahren und das Bedienelement, beispielsweise ein Lenkstockhebel oder Tasten auf dem Lenkrad, betätigt werden. Dadurch wird eine Geschwindigkeitsmarke, insbesondere in der Steuereinrichtung, gesetzt, die dann gespeichert wird und natürlich auch wieder gelöscht werden kann. Soll ein anderer Geschwindigkeitswert gesetzt werden, so wird manuell bis auf diese Geschwindigkeit verzögert oder beschleunigt und durch Betätigen des Bedienelements die Geschwindigkeit wiederum markiert. Diesen Vorgang kann man bei verschiedenen Geschwindigkeiten wiederholen, so daß ein Geschwindigkeitsprofil, beispielsweise die Geschwindigkeiten 30, 50, 60, 80 und 100 km/h, eingespeichert werden kann.

Problematisch kann das Löschen einer Geschwindigkeitsmarke sein, die einer höheren Geschwindigkeit zugeordnet ist, wenn diese Geschwindigkeit zum Löschen der Marke erst gefahren werden muß. Dieses Problem kann dadurch gelost werden, daß die Markierung bei Aktivierung auch bereits dann löschbar ist, wenn die Geschwindigkeit selbst noch nicht erreicht ist, also beispielsweise in der Beschleunigungsphase.

Alternativ kann auch ein Löschen der Geschwindigkeitsmarken im Stand vorgesehen werden. Dabei sind die gesetzten Geschwindigkeitswerte "aktivierbar". Nach dem Aktivieren können sie mittels dem Bedienelement gelöscht werden.

Diese Geschwindigkeiten können vorzugsweise in einem Display, insbesondere einem Tachometer, dem Fahrzeugbediener angezeigt werden. Fährt nun ein Fahrzeug auf einer Landstraße mit einer angewählten Sollgeschwindigkeit von 100 km/h und muß aufgrund einer Geschwindigkeitsbegrenzung auf 80 km/h verlangsamen, so kann der Fahrbediener das Bedienelement einmal in Richtung "Verzögerung" bedienen, so daß die nächstniedrigere Geschwindigkeitsmarke - im vorgenannten Geschwindigkeitsprofil 80 km/h - angefahren wird. Die Steuereinrichtung kann auch so ausgebildet werden, daß durch mehrfaches Tippen Marken übersprungen werden. Ist der Bedienhebel bereits derart ausgebildet, daß ein Betätigen desselben in Verzögerungs- oder Beschleunigungsrichtung zu einem manuellen und kontinuierlichen Verzögern bzw. Beschleunigen führt, so kann die erfindungsgemäße Funktion mittels einer Überdrückmöglichkeit (Überdrücken in Verzögerungs-oder Beschleunigungsrichtung) hinzugefügt werden.

Vorzugsweise können die gesetzten Marken an einen benutzten Fahrzeugschlüssel gekoppelt sein, so daß jeder Fahrzeugbenutzer sein eigenes gesetztes Geschwindigkeitsprofil zur Verfügung gestellt bekommt. Um eine Marke löschen zu können, wird vorzugsweise bei einer gefahrenen Konstantgeschwindigkeit das Bedienelement wiederum betätigt, so daß die gerade ausgewählte Marke gelöscht wird.

Insgesamt bringt die vorliegende Erfindung einen Komfortgewinn. Ferner kann die Anzahl der Blickzuwendungen auf das Armaturenbrett reduziert werden.

Die vorliegende Erfindung wird nachfolgend anhand eines Ausführungsbeispiels und der einzigen beiliegenden Zeichnung näher erläutert.

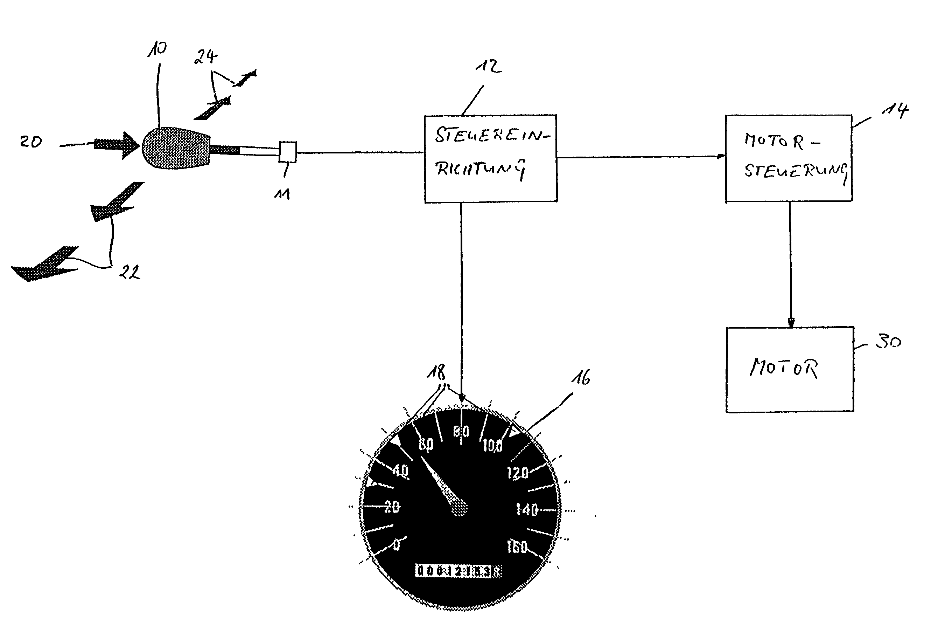

Die einzige Zeichnung zeigt ein schematisches Blockschaltbild einer Anordnung zur Durchführung der Erfindung. Ein Lenkstockhebel 10 mit einem Geber 11 ist mit einer Steuereinrichtung 12 verbunden, welche die vom Lenkstockhebel 10 bzw. dessen Geber 11 kommenden Signale auswertet und entsprechende Befehle an eine Motorsteuerung 14 weitergibt, mit der sie wiederum verbunden ist. Die Motorsteuerung 14 betreibt einen Motor 30 eines Fahrzeugs in der erforderlichen Weise, um die angewählte Geschwindigkeit beizubehalten.

Die Steuereinrichtung 12 ist ferner mit einem Tachometer verbunden.

Der Lenkstockhebel 10 kann zum einen in Fahrtrichtung, (Pfeile 24), entgegen der Fahrtrichtung (Pfeile 22) sowie in axialer Richtung (Pfeil 20) betätigt werden. Durch Betätigung des Lenkstockhebels 10 in axialer Richtung (Pfeil 20) kann für eine momentan gefahrene Geschwindigkeit eine Geschwindigkeitsmarkierung gewählt werden Der Motor 30 des Fahrzeugs wird dann über die Motorsteuerung 14 auf das Einhalten dieser Geschwindigkeit hin gesteuert. Gleichzeitig wird eine entsprechende Geschwindigkeitsmarke 18 über die Steuereinrichtung 12 auf dem Display 16 gesetzt.

Durch einfaches Betätigen des Lenkstockhebels 10 in Richtung der Pfeile 24 oder 22 kann die konstant einzuhaltende Geschwindigkeit dann erhöht oder verringert werden.

Wird bei einer anderen gefahrenen Geschwindigkeit der Lenkstockhebel 10 dann nochmals in Axialrichtung betätigt (Pfeil 20), wird eine nächste Geschwindigkeitsmarke 18 gesetzt. Durch eine Abfolge solcher Maßnahmen kann sich ein Fahrzeugbediener eine Reihe von Geschwindigkeitsmarken setzen, die ein für den Fahrzeugbediener typisches Geschwindigkeitsprofil ergeben. Beispielsweise könnte ein Geschwindigkeitsprofil mit 30, 50, 60, 80 und 100 km/h vorgegeben sein, wobei bei den entsprechenden Geschwindigkeiten jeweils Marken 18 gesetzt werden.

In der vorliegenden Figur sind Geschwindigkeitsmarken bei 30, 50 und etwa 100 km/h gesetzt.

Fahrt nun ein Fahrzeugbediener im vorliegenden Ausführungsbeispiel konstant 50 km/h (Geschwindigkeitsmarke 2), so kann er durch Überdrücken des Lenkhebels über einen vorgesehenen Widerstand (Doppelpfeil 22 bzw. 24) entgegen oder in Fahrtrichtung zu der nächstniedrigeren bzw. höheren Geschwindigkeitsmarke wechseln. Das heißt, durch Überdrücken des Lenkstockhebels 10 in Fahrtrichtung würde er im vorliegenden Fall von einer in einem Ort erlaubten Höchstgeschwindigkeit von 50 km/h auf eine Geschwindigkeit von 100 km/h kommen, die auf der Landstraße erlaubt sind.

Die Geschwindigkeitsmarken stehen auch nach dem Abstellen und erneuten Starten eines Fahrzeugs wieder zur Verfügung und sind mit einem Fahrzeugschlüssel gekoppelt. So kann für jeden Fahrzeugnutzer ein typisches Geschwindigkeitsprofil eingestellt werden.

Natürlich können auch andere Ausführungsformen der Erfindung realisiert werden. Beispielsweise können die Geschwindigkeitsmarken separat in einem Display angezeigt werden. Ferner kann das Bedienelement, hier in Form eines Lenkstockhebels 10, anders realisiert werden. Schließlich kann die vorliegende Wähleinrichtung mit einer Kollisionsvermeidungsvorrichtung gekoppelt werden, die bei einem zu dichten Auffahren auf ein anderes Fahrzeug oder einen anderen Gegenstand automatisch abbremst bzw. eine automatische Geschwindigkeitsanpassung betriebt. Solche Vorrichtungen sind vielfach bekannt, so daß vorliegend nicht näher darauf eingegangen wird.

Wesentlich ist vorliegend, daß verschiedene Geschwindigkeitswerte gesetzt werden können, die dann auch vom Fahrzeugbediener anfahrbar sind.

## Patentansprüche

1. Wähleinrichtung zur Einstellung der Fahrgeschwindigkeit eines Fahrzeugs mit einem Bedienelement (10), welches mit einer Steuereinrichtung (12) verbunden ist, welche wiederum mit einer Motorsteuerung (14) gekoppelt und derart ausgebildet ist, dass bei Aktivieren der Wähleinrichtung zumindest eine ausgewählte Fahrzeuggeschwindigkeit automatisch und im wesentlichen konstant beibehalten wird, wobei die aktuell beizubehaltende Fahrgeschwindigkeit durch Betätigen des Bedienelements kontinuierlich veränderbar ist, **dadurch gekennzeichnet, dass** das Bedienelement (10) und die Steuereinrichtung (12) derart ausgebildet sind, dass zumindest zwei Fahrzeuggeschwindigkeitswerte (Geschwindigkeitsmarken 18) markiert und diese durch Betätigen des Bedienelements (10) angefahren werden können, und dass eine Geschwindigkeitsmarke beim Fahren einer momentanen Geschwindigkeit durch Betätigung des Bedienelements (10) auf diese Geschwindigkeit gesetzt oder - bei einer gesetzten Geschwindigkeitsmarke - durch Betätigung des Bedienelements (10) gelöscht werden kann.

2. Wähleinrichtung nach Anspruch 1, **dadurch gekennzeichnet, dass** ein Display (16) vorgesehen ist, in dem die gesetzten Fahrzeuggeschwindigkeitswerte (Geschwindigkeitsmarken 18) angezeigt werden, wobei das Display ein Tachometer (16) ist.

3. Wähleinrichtung nach Anspruch 1 oder 2, **dadurch gekennzeichnet, dass** die gesetzten Fahrzeuggeschwindigkeitswerte (Geschwindigkeitsmarken 18) an einen Fahrzeugschlüssel gekoppelt sind.

## Claims

1. A selector device for adjusting the travelling speed of a vehicle with an operating element (10), which is connected to a control device (12), which is in turn coupled to an engine controller (14) and is designed in such a way that, on activation of the selector device, at least one selected vehicle speed is automatically and substantially constantly maintained, wherein the travelling speed to be currently maintained can be continuously changed by actuating the operating element, **characterised in that** the operating element (10) and the control device (12) are designed in such a way that at least two vehicle speed values (speed marks 18) can be marked and these can be applied by actuating the operating element (10) and **in that** when travelling at an instantaneous speed, a speed mark can be set to this speed by actuating the operating element (10) or - when a speed mark is set - can be cancelled by actuating the operating element (10).

2. A selector device according to claim 1, **characterised in that** a display (16) is provided, in which the set vehicle speed values (speed marks 18) are displayed, the display being a speedometer (16).

3. A selector device according to claim 1 or 2, **characterised in that** the set vehicle speed values (speed marks 18) are coupled to a vehicle key.

## Revendications

1. Dispositif de sélection pour le réglage de la vitesse de conduite d'un véhicule, comportant un élément de commande (10) relié à un dispositif de commande (12) lui-même couplé à une commande de moteur (14) et configuré de telle sorte que lors de l'activation du dispositif de sélection, au moins une vitesse du véhicule sélectionnée est conservée automatiquement et pour l'essentiel de façon constante, la vitesse du véhicule devant être momentanément conservée pouvant être modifiée de manière continue par l'actionnement de l'élément de commande,
**caractérisé en ce que**
l'élément de commande (10) et le dispositif de commande (12) sont configurés de telle sorte qu'au moins deux valeurs de vitesse du véhicule (marques de vitesse 18) sont marquées et peuvent être sélectionnées par l'actionnement de l'élément de commande (10), et
une marque de vitesse, en présence d'une vitesse momentanée, peut être définie sur cette vitesse par l'actionnement de l'élément de commande (10) ou (si la marque de vitesse est déjà définie) peut être effacée par l'actionnement de l'élément de commande (10).

2. Dispositif de sélection selon la revendication 1,
**caractérisé en ce qu'**
il est prévu un dispositif d'affichage (16) sur lequel sont affichées les valeurs de vitesse du véhicule définies (marques de vitesse 18), le dispositif d'affichage étant un compteur de vitesse (16).

3. Dispositif de sélection selon la revendication 1 ou 2,
**caractérisé en ce que**
les valeurs de vitesse du véhicule définies (marques de vitesse 18) sont couplées à une clé du véhicule.
